# EUROPÄISCHE PATENTSCHRIFT

(11) **EP 1 319 872 B1**
(45) Veröffentlichungstag und Bekanntmachung des Hinweises auf die Patenterteilung: **26.04.2006**
(21) Anmeldenummer: 02026140.0
(22) Anmeldetag: 23.11.2002
(51) Int. Cl.: F16H 59/02, G05G 25/02, F16H 61/26

(54) **Schaltvorrichtung für einen Handschalhebel**
Gear shifting device
Dispositif au passage des vitesses

(30) Priorität: 15.12.2001 DE 10161699
(43) Veröffentlichungstag der Anmeldung: 18.06.2003
(73) Patentinhaber: Dr.Ing. h.c.F. Porsche Aktiengesellschaft, 70435 Stuttgart (DE)
(72) Erfinder: Sander, Edmund, 71229 Leonberg (DE); Netzker, Ralph-Maria, 71636 Ludwigsburg (DE)

(56) Entgegenhaltungen:
- DE-A- 1 935 048
- DE-A- 4 204 379
- DE-A- 10 047 841
- FR-A- 2 693 808

## Beschreibung

Die Erfindung bezieht sich auf eine Schaltvorrichtung für einen Handschalthebel nach dem Oberbegriff des Patentanspruchs 1.

Aus der gattungsgemäßen Druckschrift DE 69 302 533 T2 ist eine mechanische Hilfseinrichtung für eine Gangschaltung eines mechanischen Schaltgetriebes bekannt, bei der zwischen einer Schaltwelle im Getriebe und einem im Handschalthebel eine Stelleinrichtung angeordnet ist, die mit einem Übertragungsmittel, wie beispielsweise einem Seilzug verbunden wird. Die Stelleinrichtung umfasst im wesentlichen zwei miteinander verbundene Teile, deren Relativverschiebung in elastischer Weise durch eine Feder gesteuert wird, um ein Einlegen der Gänge zu erleichtern. Des weiteren ist aus der DE 19 35 048 eine elastische Schaltstange bekannt, die aus zwei durch elastische Polster miteinander verbundenen Bändern besteht, die elastische Verschiebungen erlauben und hierdurch Schwingungen am Handschalthebel verminderbar sind.

Aufgabe der Erfindung ist es, eine Schaltvorrichtung mit einer Stelleinrichtung zu schaffen, durch die eine Verbesserung der Schaltqualität des Getriebes durch ein Herausfiltern von höherfrequenten Schaltstörungen erzielt wird und Schwingungen am Handschaltschalthebel zu vermeiden.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, die in Abhängigkeit von den jeweiligen Betriebszuständen entstehenden Schaltstörungen, welche sich beim Fahrer als Beeinträchtigung des Schaltkomforts bemerkbar machen, abzubauen bzw. zu verhindern. Dies erfolgt nach der Erfindung dadurch, dass der Innenhebel eine vom Außenhebel umgebende Zunge bildet, die mit ihrem freien Ende am Außenhebel verbunden ist und rundum mit einem Spaltabstand zum Außenblech angeordnet ist.

Durch diese spezielle Ausbildung der Stelleinrichtung mit dem Innenhebel bildet sich zusammen mit der bewegten Masse des Handschalthebels ein sog. elastomechanischer Tiefpaßfilter, der die höherfrequenten Schaltstörungen aus dem Getriebe und zwischen dem Getriebe und der Fahrerhand ausfiltert, bevor sich diese Störungen in der Fahrerhand am Handschalthebel bemerkbar machen.

Hierzu ist die Filtercharakteristik über die Eigenfrequenz des schwingenden Innenhebels abgestimmt, wozu der Innenhebel eine sogenannte vom Außenhebel umgebene Zunge bildet, die mit ihrem einen Ende am Außenhebel verbunden ist und rundum mit einem Spaltabstand zum Außenhebel angeordnet ist. Die Eigenfrequenz ist durch eine Schaltsimulation ermittelbar, wobei Veränderungen berücksichtigt werden.

Damit eine Überlastung des schwingenden Innenhebels vermieden wird, kann dieser bei maximaler Auslenkung auf Anschlag am Außenhebel durch Überbrückung des Spaltmaßes gehen, so daß die Filterfunktion bei harten und schnellen Schaltungen außer Kraft gesetzt wird. Dies hat keine spürbaren Nachteile für den Schaltkomfort mehr, da die Schaltstörungen nur bei normalen und langsamen Schaltungen störend in Erscheinung treten. Bei diesen harten und schnellen Schaltungen funktioniert die Stelleinrichtung ohne Filterfunktion.

Der Außen- und Innen hebel besteht vorzugsweise aus einem plattenförmigen Teil, an dem endseitig ein separates Verbindungselement zur Schaltwelle des Getriebes befestigbar ist, das eine mit einer Verzahnung der Schaltwelle korrespondierende Innenverzahnung aufweist.

Hierdurch wird eine im wesentlichen einfache Bauweise der Stelleinrichtung bei einem geringen Gewicht erzielt. Es wird aufgrund fehlender Gelenke eine Spiel- und Reibungsfreiheit erzielt. Die Auslenkbewegungen des Innenhebels sind innerhalb eines geringen Spaltmaßes vorgesehen, wodurch schnelle Schaltungen verzögerungsfrei möglich sind.

Der Innenhebel der Stelleinrichtung ist derart schwingend im starren Außenhebel angeordnet, daß der schwingende Innenhebel 8 mit den bewegten Massen des Handschalthebels einen elastomechanischen Tiefpaßfilter zur Ausfilterung von hochfrequenten Schaltstörungen zwischen dem Getriebe und dem Handschalthebel durch einen über die Eigenfrequenz abstimmbaren Innenhebel bildet.

Ein Ausführungsbeispiel der Erfindung ist in den Zeichnungen dargestellt und wird im folgenden beschrieben.

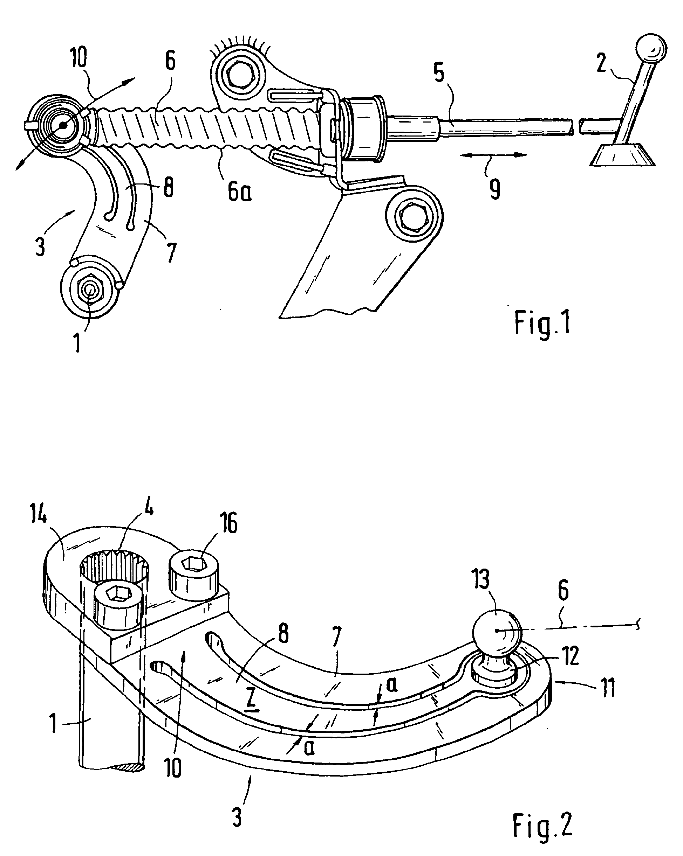

Es zeigen
- Fig. 1: eine Draufsicht auf eine Stelleinrichtung mit einem Außen- und Innenhebel und
- Fig. 2: eine schaubildliche Darstellung der Stelleinrichtung mit Außen- und Innenhebel.

Zwischen einem mechanischem Schaltgetriebe bzw. einer Schaltwelle 1 eines Getriebes und einem Handschalthebel 2 für eine Fahrerhand ist eine Stelleinrichtung 3 vorgesehen. Diese ist über eine Verzahnung 4 auf der Schaltwelle 1 des Getriebes gehalten. Mit der Stelleinrichtung 3 sind Übertragungsmittel 5, 6 verbunden, die über den Handschalthebel 2 betätigt werden und die Stelleinrichtung 3 sowie die Schaltwelle 1 die Gänge des Getriebes ansteuert.

Die Stelleinrichtung 3 umfaßt im wesentlichen einen starren mit der Schaltwelle 1 verbundenen Außenhebel 7, in welchem ein schwingender Innenhebel 8 integriert angeordnet ist. Dieser ist mit dem Übertragungsmittel 6, welches beispielsweise aus einer Stange besteht, innerhalb eines Faltenbalges 6a verbunden. Mit diesem Übertragungsmittel 6 ist des weiteren ein zum Handschalthebel 2 verbundenes Seilelement 5 oder dgl. verbunden, so daß eine Verstellbewegung der Übertragungsmittel in Pfeilrichtungen 9 erfolgt und die Stelleinrichtung 3 eine entsprechende Schwenkbewegung zum Schalten der Gänge in Pfeilrichtungen 10 durchführen kann.

Der Innenhebel 8 bildet eine sogenannte Zunge im Außenhebel 7 und erstreckt sich in diesem der Länge nach, wobei der Innenhebel 8 vom Außenhebel 7 rundum bis auf die Verbindung bei 10 mit einem Spaltabstand a umgeben ist, so daß dieser Innenhebel 8 in Grenzen des Spaltabstandes a freischwingend im Außenhebel 7 angeordnet ist.

Der Innenhebel 8 ist an dem einen Ende 10 mit dem Außenhebel 7 verbunden und erstreckt sich nahezu bis zum freien Ende 11 des Außenhebels 7 und weist an seinem Ende 12 eine Verbindungsaufnahme 13 für das Übertragungsmittel 6 auf.

Die Stelleinrichtung 3 bzw. der Außen- und Innenhebel 7, 8 besteht aus einem plattenförmigen Element und weist für die Verzahnung 4 ein separates Verbindungselement 14 auf, das mit dem plattenförmigen Element über Schrauben 16 verbindbar ist.

Der Außen- und Innenhebel 7, 8 kann nach einer weiteren Ausführung mit dem Verbindungselement 14 auch einteilig ausgeführt sein.

Während eines Schaltvorganges können in den hintereinander geschalteten Systemen der Innenschaltung (im Getriebe) und der Außenschaltung (zwischen dem Getriebe und der Fahrerhand) bzw. dem Handschalthebel 2 in Abhängigkeit von den jeweiligen Betriebszuständen sogenannte Schaltstörungen entstehen, die sich beim Fahrer als Beeinträchtigung des Schaltkomforts durch Kratzen, Klemmen, Hakeln usw. bemerkbar machen. Eine ursächliche Vermeidung dieser Störungen ist aufgrund der zahlreichen beteiligten Parameter, wie Spiele, Elastizitäten, Massen, Schalt- und Sperrkräfte und unterschiedliche Drehzahlen nicht immer zufriedenstellend möglich.

Die Stelleinrichtung 3 ist aufgrund ihrer Ausbildung mit einem Innen- und Außenhebel 8, 7 in der Lage, Schaltmassen zu ersetzen, wobei sie zusammen mit den bewegten Massen der Außenschaltung wie der Seele des Schaltzuges, dem Handschalthebel 2 und dem Schaltknauf einen elastomechanischen Tiefpaßfilter bildet, der die höherfrequenten Schaltstörungen ausfiltert, bevor sie sich in der Fahrerhand komfortmindernd bemerkbar machen.

Die Filtercharakteristik wird über die Eigenfrequenz des schwingenden Innenhebels 8 abgestimmt. Diese Eigenfrequenz wird beispielsweise durch eine Schaltungssimulation errechnet und/oder empirisch ermittelt. Wie jedes Filterelement verändert auch diese Einrichtung 3 die Phasenlage von "Nutzsignal" (Schaltkraft) zu "Störsignal" (Schaltstörung), was im Idealfall zu einer (gleichphasigen) Addition der Kraftanteile und damit einer Auslöschung der Schaltstörung führt.

Um eine Überlastung des schwingenden Innenhebels 8 zu vermeiden, geht dieser nach seiner maximalen Auslenkung auf Anschlag am Außenhebel 7, der die Filterfunktion bei harten Stellenschaltungen außer Kraft setzt. Dies hat keine spürbaren Nachteile für den Schaltkomfort mehr, da die Schaltstörungen nur bei normalen und langsamen Schaltungen (sogenannten Komfortschaltungen) störend in Erscheinung treten. Die Stelleinrichtung 3 funktioniert bei harten und schnellen Schaltungen wie ein üblicher starrer Hebel ohne Filterfunktion.

## Patentansprüche

1. Schaltvorrichtung für einen Handschalthebel (2), der mittels eines Übertragungsmittels (5, 6) mit einer zwischengeschalteten Stelleinrichtung (3) verbunden wird, welche auf einer Schaltwelle (1) eines Getriebes angeordnet ist und die Stelleinrichtung (3) einen starren, mit der Schaltwelle (1) verbundenen Außenhebel (7) mit einem integrierten, schwingenden Innenhebel (8) umfaßt, der mit den Übertragungsmitteln (5, 6) des Handschalthebels (2) verbunden und begrenzt auslenkbar im Außenhebel (7) angeordnet ist, **dadurch gekennzeichnet, dass** der Innenhebel (8) eine vom Außenhebel (7) umgebende Zunge (Z) bildet, die mit ihrem einen Ende (10) am Außenhebel (7) verbunden ist und rundum mit einem Spaltabstand (a) zum Außenhebel (7) angeordnet ist.

2. Schaltvorrichtung nach Anspruch 1, **dadurch gekennzeichnet, dass** der Außen- und Innenhebel (7, 8) aus einem plattenförmigen Teil besteht, an dem endseitig ein separates Verbindungselement (14) zur Schaltwelle (1) des Getriebes befestigt ist, das eine mit einer Verzahnung der Schaltwelle (1) korrespondierende Innenverzahnung (4) aufweist.

3. Schaltvorrichtung nach den Ansprüchen 1 oder 2, **dadurch gekennzeichnet, dass** der Außen- und Innenhebel (7, 8) mit dem Verbindungselement (14) als einteiliges Bauteil ausgeführt ist.

4. Schaltvorrichtung nach Anspruch 3, **dadurch gekennzeichnet, dass** die Stelleinrichtung (3) mit den bewegten Massen des Handschalthebels (2) einen elastomechanischen Tiefpassfilter zur Ausfilterung von hochfrequenten Schaltstörungen zwischen dem Getriebe und dem Handschalthebel durch einen über die Eigenfrequenz abstimmbaren Innenhebel (8) bildet.

## Claims

1. A gearshift device for a manual gearshift lever (2) which is connected by a transmission means (5, 6) to an interposed actuating device (3) arranged on a selector shaft (1) of a gearbox, and the actuating device (3) comprises a rigid outer lever (7) connected to the selector shaft (1) and provided with an integral, vibrating inner lever (8) which is connected to the transmission means (5, 6) of the manual gearshift lever (2) and arranged with limited deflectability in the outer lever (7), **characterised in that** the inner lever (8) forms a tongue (Z) surrounded by the outer lever (7) and connected thereto at one end (10) and provided all around with a clearance (a) relative to the outer lever (7).

2. A gearshift device according to claim 1, **characterised in that** the outer and inner lever (7, 8) comprise a plate-shaped part, to the end of which is fixed a separate connecting member (14) for connection to the selector shaft (1) of the gearbox, the connecting member (14) having internal toothing (4) which corresponds to toothing of the selector shaft (1).

3. A gearshift device according to claim 1 or claim 2, **characterised in that** the outer and inner lever (7, 8) are formed in one piece with the connecting member (14).

4. A gearshift device according to claim 3, **characterised in that** the actuating device (3), together with the moving masses of the manual gearshift lever (2), forms an elastomechanical low-pass filter for filtering out high-frequency gearshift interference between the gearbox and the manual gearshift lever by means of an inner lever (8) which is tunable via its natural frequency.

## Revendications

1. Dispositif de changement de vitesse pour un levier de changement de vitesse (2), qui est relié par l'intermédiaire d'un moyen de transmission (5, 6) avec un dispositif de commande (3) intercalé, qui est disposé sur un arbre de commande (1) d'une boîte de vitesses et le dispositif de commande (3) comporte un bras extérieur (7), qui est relié à l'arbre de commande (1) et dans lequel est intégré un bras intérieur (8) oscillant, qui est relié aux moyens de transmission (5, 6) du levier de changement de vitesse (2) et est disposé de manière limitée en mouvements dans le bras extérieur (7), **caractérisé en ce que** le bras intérieur (8) forme une patte (Z), qui est délimitée par le bras extérieur (7) et qui est reliée au bras extérieur (7) par l'une (10) de ses extrémités et est disposée sur tout le pourtour à une distance (a) par rapport au bras extérieur (7).

2. Dispositif de changement de vitesse selon la revendication 1, **caractérisé en ce que** les bras extérieur et intérieur (7, 8) sont formés par une pièce plate, sur une extrémité de laquelle est fixé un élément d'assemblage (14) séparé, qui est destiné à l'assemblage avec l'arbre de commande (1) de la boîte de vitesses et qui comporte une denture interne (4) correspondant avec une denture de l'arbre de commande (1).

3. Dispositif de changement de vitesse selon la revendication 1 ou 2, **caractérisé en ce que** le bras extérieur et intérieur (7, 8) sont réalisés d'un seul tenant avec l'élément d'assemblage (14).

4. Dispositif de changement de vitesse selon la revendication 3, **caractérisé en ce que** le dispositif de commande (3) forme avec les masses en mouvement du levier de changement de vitesse (2) un filtre passe-bas élastomécanique destiné à filtrer les troubles de passage de vitesse à hautes fréquences entre la boîte de vitesses et le levier de changement de vitesse au moyen d'un bras intérieur (8) ajustable sous l'effet de la fréquence de résonance.
